# EUROPEAN PATENT APPLICATION

(11) **EP 2 051 517 A1**
(43) Date of publication of application: **22.04.2009**
(21) Application number: 07791780.5
(22) Date of filing: 01.08.2007
(51) Int. Cl.: H04N 5/91, G11B 27/00, G11B 27/10, H04N 5/76

(54) **INFORMATION PROCESSING DEVICE, INFORMATION PROCESSING METHOD, AND COMPUTER PROGRAM**

(30) Priority: 10.08.2006 JP 2006218766
(71) Applicant: Sony Corporation, Tokyo 108-0075 (JP)
(72) Inventor: MAE, Atsushi, Tokyo 108-0075 (JP); ARIDOME, Kenichiro, Tokyo 108-0075 (JP); ISOBE, Yukio, Tokyo 108-0075 (JP); MORIMOTO, Naoki, Tokyo 108-0075 (JP); MAEDA, Tetsuhiro, Tokyo 108-0075 (JP)
(74) Representative: Beder, Jens
(86) International application number: PCT/JP2007/065100
(87) International publication number: WO 2008/018346

(57) **Abstract**

A configuration is provided which enables reading and display processing of a representative image such as thumbnail list display to be performed effectively. For example, an arrangement is made wherein, as the access information of a referenced image (IDR) serving as a representative image that has been set corresponding to a chapter, representative image access information including address information and reading data size information that are applied to reading of the representative image is recorded in a playlist file or index file. According to this configuration, in the case of performing reading playback of a representative image, such as thumbnail list display, processing with reference to the representative image access information can be performed, and reading playback of an IDR can be performed effectively and rapidly.

## Description

### Technical Field

The present invention relates to an information processing device, information processing method, and computer program, for performing data recording/playback processing. More specifically, for example, in a case wherein the representative image of each chapter is displayed as a thumbnail (reduction image) list, or the like, the present invention relates to an information processing device, information processing method, and computer program for performing data recording and data playback processing which enable processing for selecting and displaying a representative image from a predetermined image section to be performed effectively.

### Background Art

As of recent, there have appeared video cameras of a type which save moving images and still images in disks instead of conventional recording tape, as the recording capacity of disk type recording media has increased. Disk type recording media is capable of random access, so desired scenes can be efficiently found, and use without deterioration of the information recording medium (media) can be made since access to the data is non-contact. For example, the number of users of DVD cameras is increasing year by year, due to excellent image quality, and ease of use such as editing capabilities.

Further, as of recent, equipment which records and plays Hi-Vision data with improved data quality, i.e., HD (High-Definition) digital data, has been developed and used.

Also, AVCHD format has been proposed as a newest HD data recording format. AVCHD format is a format wherein a moving image stream taken with a video camera is encoded into an MPEG-2TS stream, and has a hierarchical data management configuration.

With this AVCHD format, files which are index (index), movie object (MovieObject), play list (PlayList), clip information (ClipInformation), and clip AV stream (CLipAVStream) are generated and recorded. This recording format will be described in detail in the description of the present invention.

With this AVCHD format actual data which is recorded is recorded in a clip AV stream (CLipAVStream) file, and management information and the like corresponding to the actual data is set so as to be recorded scattered in the attribute information files of index (index), movie object (MovieObject), play list (Playlist), and clip information (ClipInformation).

In the case of performing playback of such recorded data, there is a case wherein there is performed processing for showing a list of representative images selected for each playback section such as a chapter or the like on a display. An example of this case is display processing of a thumbnail list for allowing a user to select a playback object from a lot of recorded data effectively.

Data recorded in an information recording medium is encoded data, and for example, which is encoded data configured of GOPs (Group Of Pictures) to be set as a picture group including referenced pictures. A playback device creates and displays a list of selected images from such encoded data at the time of playback list display. With this list display processing, in many cases, a referenced picture [I (Intra) picture] included in a GOP is selected, decoded, and displayed. This is because the I picture is decodable data without referencing another picture, whereby decoding can be performed effectively. Note that with the AVCHD format, a referenced picture is referred to as an IDR (Instantaneous Decoding Refresh) picture.

In the case of selecting and displaying such a referenced picture (IDR (I) picture), there is a need to obtain the recording position of the information recording medium of the IDR picture from a management information file. For example, with data recorded following the above-mentioned AVCHD format, management information is recorded in the attribute information files of index (index), movie object (MovieObject), play list (PlayList), and clip information (ClipInformation), and in the case of obtaining a recording position of the information recording medium of the IDR picture, there is a need to access those multiple files to read necessary information sequentially. For example, in the case of displaying a great number of representative images in a list form, a lot of time is needed, which causes a user to be kept waiting.

### Disclosure of Invention

### Technical Problem

The present invention has been made in light of the above-described problem, and provides an information processing device, information processing method, and computer program, wherein the access information of a representative image necessary for selecting and displaying a representative image such as a list display of thumbnail images, e.g., a referenced picture (IDR (I) picture) is obtained effectively, and data recording/data playback processing for realizing rapid display processing is executed.

### Technical Solution

A first aspect of the present invention is an information processing device characterized in having a control unit for performing data recording processing control as to an information recording medium;
wherein the control unit is of a configuration for performing data recording control in accordance with a data recording format having a predetermined hierarchical management configuration that has been stipulated beforehand, and being of a configuration for performing control for recording representative image access information to be applied to reading of a representative image of a data section set in recorded data in an attribute information file in accordance with the recording format.

Further, in an embodiment of the information processing device according to the present invention, the control unit is characterized in being of a configuration for performing recording of encoded data in which GOPs (Group Of Pictures) configured of picture groups have been set, and recording control of management information corresponding to recorded data;
wherein the control unit is of a configuration for performing control of recording information to be applied to reading of a referenced picture to be set as a representative image in increments of chapter to be set with a mark serving as playback section information in the attribute information file as representative image access information.

Further, in an embodiment of the information processing device according to the present invention, the control unit is characterized in being of a configuration for performing control of recording address information and reading data size information to be applied to reading of a representative image in the attribute information file as the representative image access information.

Further, in an embodiment of the information processing device according to the present invention, the control unit is characterized in being of a configuration for performing data recording control following the AVCHD format, and being of a configuration for performing control of recording information to be applied to reading of an IDR (Instantaneous Decoding Refresh) picture which is a referenced picture to be set as a representative image in increments of chapter to be set with a playlist mark stipulated with the AVCHD format as playback section information in the attribute information file as representative image access information.

Further, in an embodiment of the information processing device according to the present invention, the representative image access information is characterized in being an IDR logical sector number serving as address information to be applied to reading of the IDR picture, and an IDR size which is the data size of the IDR picture.

Further, in an embodiment of the information processing device according to the present invention, the control unit is characterized in being of a configuration for performing data recording control following the AVCHD format which is a data recording format having a hierarchical management configuration that has been stipulated beforehand, and being of a configuration for performing control of recording the representative image access information in an attribute information file storing attribute information that is stipulated with the AVCHD recording format.

Further, in an embodiment of the information processing device according to the present invention, the control unit is characterized in being of a configuration for performing control of recording the representative image access information in a playlist file or index file which is stipulated with the AVCHD recording format.

Further, in an embodiment of the information processing device according to the present invention, the control unit is characterized in being of a configuration for performing control of recording the representative image access information in a write-permitted region of maker-corresponding information set in a playlist file or index file which is stipulated with the AVCHD recording format.

Further, a second aspect of the present invention is an information processing device for executing playback processing of data recorded in an information recording medium following a data recording format having a hierarchical management configuration that has been stipulated beforehand, characterized in having a control unit for performing playback control of data recorded in an information recording medium;
wherein the control unit is, with representative image reading processing of the data section set in the recorded data of an information recording medium, of a configuration for obtaining representative image access information including the address information and reading data size information of a representative image recorded in an attribute information file stipulated with the recording format, and performing reading of the representative image following the obtained representative image access information.

Further, in an embodiment of the information processing device according to the present invention, the data recorded in an information recording medium is characterized in being encoded data in which GOPs (Group Of Pictures) configured of picture groups have been set, and the control unit is characterized in being of a configuration for performing processing to which the representative image access information is applied at the time of reading of a referenced picture to be set as a representative image in increments of chapter set with a mark serving as playback section information.

Further, in an embodiment of the information processing device according to the present invention, the control unit is characterized in being of a configuration for performing playback control of recorded data following the AVCHD format, and being of a configuration for performing processing to which the representative image access information is applied at the time of reading of an IDR (Instantaneous Decoding Refresh) picture which is a referenced picture to be set as a representative image in increments of chapter to be set with a playlist mark stipulated with the AVCHD format as playback section information.

Further, in an embodiment of the information processing device according to the present invention, the representative image access information is characterized in being an IDR logical sector number serving as address information to be applied to reading of the IDR picture, and an IDR size which is the data size of the IDR picture.

Further, in an embodiment of the information processing device according to the present invention, the control unit is characterized in being of a configuration for performing playback control of recorded data following the AVCHD format which is a data recording format having a hierarchical management configuration that has been stipulated beforehand, and being of a configuration for obtaining representative access information recorded in a playlist file or index file stipulated with the AVCHD recording format, and performing reading of the representative image following the obtained representative image access information.

Further, in an embodiment of the information processing device according to the present invention, the control unit is characterized in being of a configuration for obtaining representative image access information recorded in a write-permitted region of maker-corresponding information set in a playlist file or index file which is stipulated with the AVCHD recording format, and performing reading of the representative image following the obtained representative image access information.

Further, a third aspect of the present invention is an information processing method characterized in performing data recording processing control as to an information recording medium with an information processing device;
wherein a control unit performs data recording control following a data recording format having a hierarchical management configuration that has been stipulated beforehand, and performs control of recording representative image access information to be applied to reading of a representative image of a data section set in recorded data in an attribute information file following the recording format.

Further, in an embodiment of the information processing method according to the present invention, the control unit is characterized in performing recording of encoded data in which GOPs (Group Of Pictures) configured of picture groups have been set, and recording control of management information corresponding to recorded data, and performing control of recording information to be applied to reading of a referenced picture to be set as a representative image in increments of chapter set with a mark serving as playback section information in the attribute information file as representative image access information.

Further, in an embodiment of the information processing method according to the present invention, the control unit is characterized in performing control of recording address information and reading data size information to be applied to reading of a representative image in the attribute information file as the representative image access information.

Further, in an embodiment of the information processing method according to the present invention, the control unit is characterized in performing data recording control following the AVCHD format, and performing control of recording information to be applied to reading of an IDR (Instantaneous Decoding Refresh) picture which is a referenced picture to be set as a representative image in increments of chapter to be set with a playlist mark stipulated with the AVCHD format as playback section information in the attribute information file as representative image access information.

Further, in an embodiment of the information processing method according to the present invention, the representative image access information is characterized in being an IDR logical sector number serving as address information to be applied to reading of the IDR picture, and an IDR size which is the data size of the IDR picture.

Further, in an embodiment of the information processing method according to the present invention, the control unit is characterized in performing data recording control following the AVCHD format which is a data recording format having a hierarchical management configuration that has been stipulated beforehand, and performing control of recording the representative image access information in an attribute information file storing attribute information stipulated with the AVCHD recording format.

Further, in an embodiment of the information processing method according to the present invention, the control unit is characterized in performing control of recording the representative image access information in a playlist file or index file stipulated with the AVCHD recording format.

Further, in an embodiment of the information processing method according to the present invention, the control unit is characterized in performing control of recording the representative image access information in a write-permitted region of maker-corresponding information set in a playlist file or index file which is stipulated with the AVCHD recording format.

Further, a fourth aspect of the present invention is an information processing method characterized in executing playback processing of data recorded in an information recording medium following a data recording format having a hierarchical management configuration that has been stipulated beforehand with an information processing device;
wherein with representative image reading processing of the data section set in the recorded data of an information recording medium, the control unit obtains representative image access information including the address information, and reading data size information of a representative image recorded in an attribute information file stipulated with the recording format, and performs reading of the representative image following the obtained representative image access information.

Further, in an embodiment of the information processing method according to the present invention, the data recorded in an information recording medium is characterized in being encoded data in which GOPs (Group Of Pictures) configured of picture groups have been set, and the control unit is characterized in performing processing to which the representative image access information is applied at the time of reading of a referenced picture to be set as a representative image in increments of chapter set with a mark serving as playback section information.

Further, in an embodiment of the information processing method according to the present invention, the control unit is characterized in performing playback control of recorded data following the AVCHD format, and performing processing to which the representative image access information is applied at the time of reading of an IDR (Instantaneous Decoding Refresh) picture which is a referenced picture to be set as a representative image in increments of chapter to be set with a playlist mark stipulated with the AVCHD format as playback section information.

Further, in an embodiment of the information processing method according to the present invention, the representative image access information is characterized in being an IDR logical sector number serving as address information to be applied to reading of the IDR picture, and an IDR size which is the data size of the IDR picture.

Further, in an embodiment of the information processing method according to the present invention, the control unit is characterized in performing playback control of recorded data following the AVCHD format which is a data recording format having a hierarchical management configuration that has been stipulated beforehand, obtaining representative access information recorded in a playlist file or index file stipulated with the AVCHD recording format, and performing reading of the representative image following the obtained representative image access information.

Further, in an embodiment of the information processing method according to the present invention, the control unit is characterized in obtaining representative image access information recorded in a write-permitted region of maker-corresponding information set in a playlist file or index file which is stipulated with the AVCHD recording format, and performing reading of the representative image following the obtained representative image access information.

Further, a fifth aspect of the present invention is an computer program characterized in causing an information processing device to perform data recording processing control as to an information recording medium;
and causing a control unit to perform data recording control following a data recording format having a hierarchical management configuration that has been stipulated beforehand, and to perform control of recording representative image access information to be applied to reading of a representative image of a data section set in recorded data in an attribute information file following the recording format.

Further, a sixth aspect of the present invention is an computer program characterized in causing an information processing device to execute playback processing of data recorded in an information recording medium following a data recording format having a hierarchical management configuration that has been stipulated beforehand;
and with representative image reading processing of the data section set in the recorded data of an information recording medium, causing a control unit to obtain representative image access information including the address information and reading data size information of a representative image recorded in an attribute information file stipulated with the recording format, and to perform reading of the representative image following the obtained representative image access information.

Note that the computer program according to the present invention is a computer program which can be provided to computer systems capable of executing various types of program code for example, by way of recording media or communication media in a computer-readable form, for example, recording media such as CDs, FDs, MOs, or the like, or communication media such as networks or the like. Providing such a program in a computer-readable format realizes processing corresponding to the program on the computer system.

Further objects, features, and advantages of the present invention will become apparent from the later-described embodiments of the present invention and the attached drawings. Note that system as used in the present specification is a logical group configuration of multiple devices, and is not restricted to each component device being within the same housing.

### Advantageous Effects

According to an embodiment of the present invention, an arrangement is made wherein, as the access information of a referenced image (IDR) serving as a representative image that has been set corresponding to a chapter, representative image access information including address information and reading data size information that are applied to reading of the representative image is recorded in a playlist file or index file, whereby in the case of performing reading playback of a representative image, such as thumbnail list display, processing with reference to the representative image access information can be performed, and reading playback of an IDR can be performed effectively rapidly.

### Brief Description of the Drawings

[Fig. 1] Fig. 1 is a block diagram illustrating a configuration example of an information processing device according to the present invention.
[Fig. 2] Fig. 2 is a diagram for describing the data structure of recorded data in an information recording medium.
[Fig. 3] Fig. 3 is a UML (Unified Modeling Language) diagram illustrating the relation of playlist (PlayList), play item (PlayItem), clip (Clip), clip information (ClipInformation), and clip AV stream (CLipAVStream).
[Fig. 4] Fig. 4 is a diagram for describing the referencing relation of clips with playlists.
[Fig. 5] Fig. 5 is a diagram for describing the relation between a playlist corresponding to a main path and sub path set in the playlist, and clips.
[Fig. 6] Fig. 6 is a diagram for describing the management structure of files recorded in an information recording medium.
[Fig. 7] Fig. 7 is a diagram describing procedures of a playlist being generated along with clips of an AV stream along with recording/shooting with a video camera.
[Fig. 8] Fig. 8 is a diagram describing procedures of a playlist being generated along with clips of an AV stream along with recording/shooting with a video camera.
[Fig. 9] Fig. 9 is a diagram showing a flowchart for describing a representative image playback processing sequence of data recorded with the AVCHD format.
[Fig. 10] Fig. 10 is a diagram illustrating a configuration example of stream data recorded in an information recording medium.
[Fig. 11] Fig. 11 is a diagram illustrating the syntax of a clip information file.
[Fig. 12] Fig. 12 is a diagram for describing a representative image playback processing sequence of data recorded with AVCHD format.
[Fig. 13] Fig. 13 is a diagram for describing a write region for representative image access information in a playlist file.
[Fig. 14] Fig. 14 is a diagram illustrating a flowchart for describing a representative image playback processing sequence to which the representative image access information recorded in a playlist file is applied.
[Fig. 15] Fig. 15 is a diagram illustrating a flowchart for describing representative image playback processing to which the representative image access information recorded in a playlist file is applied.
[Fig. 16] Fig. 16 is a diagram for describing a write region of representative image access information in an index file.
[Fig. 17] Fig. 17 is a diagram illustrating a flowchart for describing a representative image playback processing sequence to which the representative image access information recorded in an index file is applied.

### Best Mode for Carrying Out the Invention

The information processing device, information processing method, and computer program, according to the present invention, will be described in detail below, with reference to the drawings. Note that description will follow the following order.
1. System Configuration
2. Data Format
3. Regarding Representative Image Obtaining Playback Processing Example Following AVCHD Format
4. Recording and Usage Configuration of Representative Image Access Information
   (4-1) Embodiment of Recording Representative Image Access Information in a Maker's Information (MakersInformation) Region in Increments of Playlist Marks in a Playlist File
   (4-2) Embodiment of Recording Representative Image Access Information in a Maker's Private Data (MakersPrivateData) Region in Index File

### 1. System Configuration

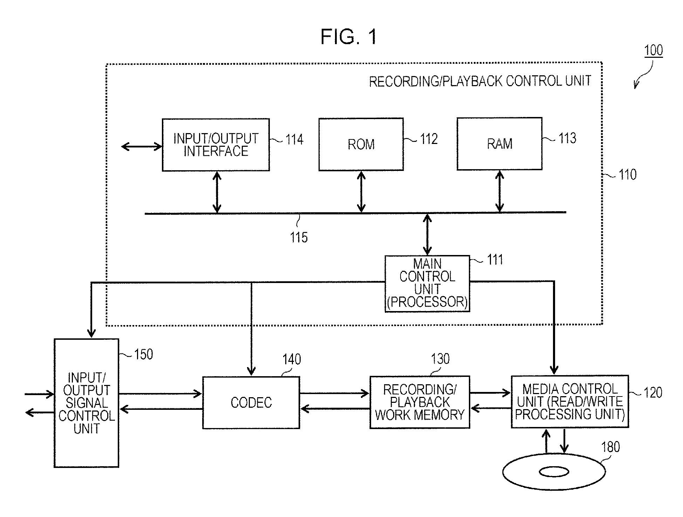

Fig. 1 is a block diagram illustrating the configuration of an information processing device 100 according to an embodiment of the present invention. Fig. 1 illustrates the configuration of a video camera which is an example of the information processing device according to the present invention. As shown in Fig. 1, the information processing device 100 includes a recording/playback control unit 110, a medium control unit (read/write processing unit) 120, recording/playback work memory 130, a codec 140, and an input/output signal control unit 150. The recording/playback control unit 110 has a main control unit (processor) 111, ROM 112, RAM 113, and an input/output interface 114.

The information processing device 100 records and plays data such as moving images and the like using information recording media 180, for example. Data recording to the information recording media 180 is executed following the AVCHD format. The data recording configuration following the AVCHD format will be described in detail in the next section, [2. Data Format].

At the time of data recording processing, moving image data, for example, input from the input/output signal control unit 150 is subjected to execution of encoding at the codec 140. At the codec 140, encoding is performed on the video stream and audio stream making up the input moving image signals for example, and a multiplexed data stream is generated. The data encoded at the codec 140 is stored in the recording/playback work memory 130, and then recorded in the information recording media 180 by processing of the media control unit 120.

The encoding processing executed at the codec 140 at the time of data recording processing differs between a case wherein the recorded data is moving images and a case of still images, and moving image files and still image files are recorded in the information recording medium 180.

The recording/playback control unit 110 controls various types of processing, such as data recording processing and data playback processing, to be executed at the information processing device. The recording/playback control unit 110 has a main control unit (processor) 111, ROM 112, RAM 113, an input/output interface 114, and a bus 115 connecting these with each other.

The main control unit (processor) 111 gives start/stop instructions for encoding/decoding processing to the codec 140, for example. Also, the main control unit (processor) 111 outputs execution commands for data read/write to/from the information recording media 180 to the media control unit 120. Further, the main control unit (processor) 111 performs control of the input/output signal control unit 150 so as to capture input signals from the codec 140, and output the captured input signals to the codec 140.

The ROM 112 of the recording/playback control unit 110 is memory for holding programs executed at the main control unit (processor) 111, various parameters, and so forth, and is realized by EERPOM such as flash memory or the like, for example. The RAM 113 is memory for holding work data and the like necessary for execution of programs at the main control unit (processor) 111, and is realized by SRAM or DRAM or the like, for example. The input/output interface 114 is an interface connected to, for example, a user input unit, display unit, network, and so forth, for performing external input/output of data and commands. For example, this is also used for updating programs within the ROM 112.

### 2. Data Format

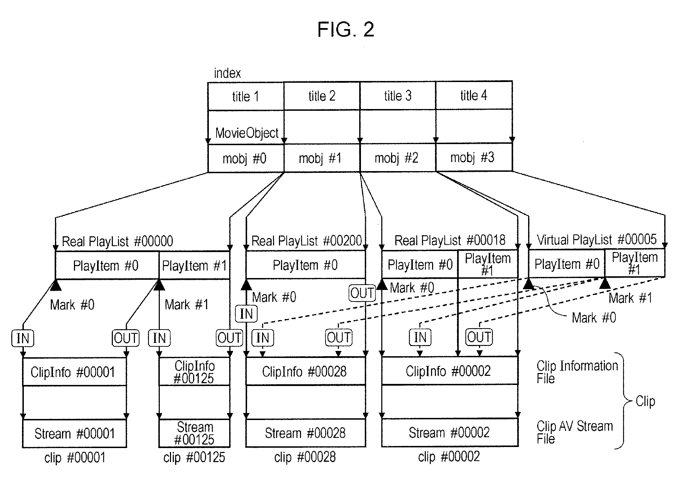

Fig. 2 illustrates an example of a data configuration for recording data in the information recording media 180. In the following, the data recording configuration following the AVCHD format will be described. As shown in the drawing, at the time of encoding a moving image stream shot with a video camera into an MPEG2-TS stream and recording, files which are index (index), movie object (MovieObject), play list (PlayList), clip information (ClipInformation), and clip AV stream (CLipAVStream) are generated and recorded. Also, clip information files corresponding to clip AV stream files in predetermined data increments will be collectively referred to as clips, for convenience. Also, the files other than clip AV stream files storing shot moving image data, which are index (index), movie object (MovieObject), play list (PlayList), and clip information (ClipInformation), storing management information and so forth, serve as attribute information files of the files. The following is a table describing details of each file.

**Table 1**

| File type | Maximum number | Role |
|---|---|---|
| index | 1 | Base file for managing the overall media. Manages the correlation between the title shown to the user and MovieObject. With the AVCHD format, the play order of the playlist which originally should be managed by the MovieObject file is managed in the metadata in the index file. |
| MovieObject | 1 | File managing the playlist played when a title is specified in the BD-ROM format. However, with the AVCHD format, this file is not referenced, and the relation between the playlist and tile is managed by metadata in the index file. |
| Real PlayList | Total 2000 | Playlist for original titles. Video recorded/played is registered in the order in which it was recorded. Playlist for creating a user-defined playback list by non-destructive editing. A virtual playlist does not have any of its own Clips, but rather points to and plays Clips recorded in one of the real playlists. |
| Virtual PlayList | | |
| Clip Information | 4000 | Exists as a pair with the Clip AV Stream, and described therein is information relating to the stream that is necessary for playing the actual stream. |
| Clip AV Stream | 4000 | A file storing a stream recorded in MPEG2-TS. AVC image data is saved in this file. |

The information recording medium 180 is its entirety managed at the file type layer of the index. An index file is created for each title to be shown to the user, managing the correlation with a movie object. With the AVCHD format, the play order of the playlist which originally should be managed by the movie object file is managed in the metadata in the index file. Upon mounting the information recording medium to a player, first, the index is read in, and the user can see the tiles described in the index.

A movie object is a file managing a playlist to be played. References to movie objects are listed in the index as title entrances. However, with the AVCHD format, the move object file is not referenced, and the relation between the playlist and tile is managed by metadata in the index file.

A playlist is a playback list provided corresponding to a title shown to the user, and is configured of at least one or more play items. Each play item has a playback start point (IN point) and playback end point (OUT point) corresponding to the clip, thereby specifying the playback section thereof. Arranging multiple play items on a time axis within the play list allows the playback order of each playback section to be specified. Also, play items referencing different clips can be included in a single playlist.

The relation between clip and playlist can be freely set. For example, reference to one clip can be performed from two playlists with different IN points and OUT points. Further, the reference relation can be freely set between titles and movie objects. Playlists are generally classified into two types in accordance with the reference relations as to clips, real playlists and virtual playlists.

Real lists are playlists for original titles, and have play items regarding a video stream recorded/taken with a video camera, in the order recorded.

Virtual playlists are playlists for creating a user-defined playback list by non-destructive editing, and virtual playlists do not have any of its own clips (AV streams), but rather point to a clip registered in one of the real playlists or a partial range thereof. That is to say, the user can cut out only necessary playback sections from multiple clips, group play items pointing to these, and edit a virtual playlist.

The clip AV stream is a file in which a stream recorded in the information recording medium 180 in MPEG-TS format has been stored. Image data is stored in this file.

Clip information is a file which exists as a pair with the clip AV stream file, and is a file in which is described information relating to the stream that is necessary for playing the actual stream.

As described above, with the AVCHD format, the attribute information files index (Index), movie object (MovieObject), play list (PlayList), and clip information (ClipInformation), and the AV stream (CLipAVStream) in which moving image data is stored, are generated and recorded with a hierarchical configuration as shown in Fig. 2.

Note that the names of these files and data are only an example, and other expressions may be used. The substantial contents of each file and data correspond as shown below.
(1) AV stream (CLipAVStream): content data
(2) clip information (ClipInformation): a file which corresponds to the AV stream in a one-to-one manner, and defines the attributes of the corresponding AV stream. (For example, coding, size, time → address conversion, playback management information, time map, etc., are included.)
(3) play item (PlayItem): data specifying the playback section as to clip information (ClipInformation) with a playback start point and playback end point.
(4) playlist (PlayList): a playback list configured of one or more play items (PlayItem).
(5) mark (Mark): generally exists in a playlist (PlayList), and indicates a certain temporal position of playback contents. Generally, between a mark and a mark is called a chapter.
(6) move object (MovieObject): A group of commands for performing playback control.
(7) title (Title): Group of playback lists (which a user can recognize).

Note that while in the following description, data and files having the above-described correspondence will be described as clip AV stream (CLipAVStream), clip information (ClipInformation), play item (PlayItem), playlist (PlayList), mark (Mark), movie object (MovieObject), and title (Title), the present invention is applicable to configurations having data, files, etc., of substantially the same content.

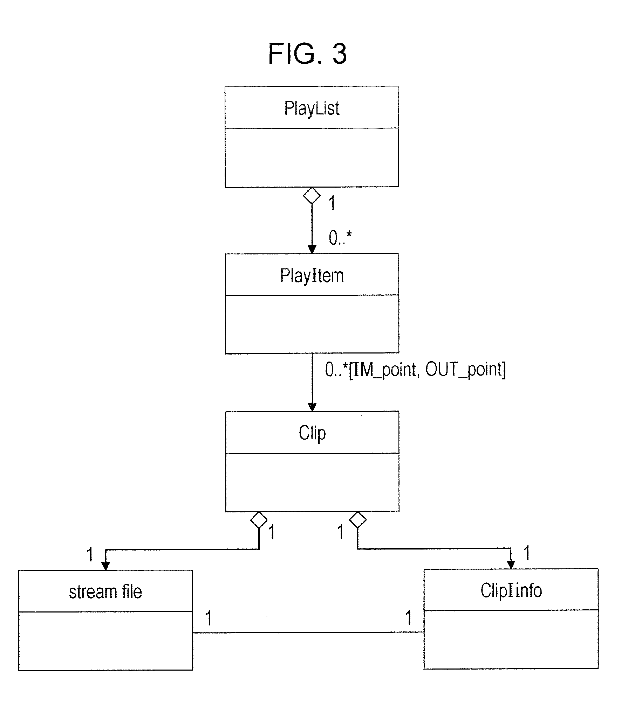

Fig. 3 is a UML (Unified Modeling Language) diagram illustrating the relation of playlist (PlayList), play item (PlayItem), clip (Clip), clip information (ClipInformation), and clip AV stream (CLipAVStream), described with reference to Fig. 2. A playlist is correlated with one or multiple play items, and a play item is correlated with one clip. Multiple play items with different start points and/or end points can be correlated to a single clip. A single clip AV stream file is referenced from a single clip. In the same way, a single clip information file is referenced from a single clip. Also, a clip AV stream file and clip information file have a one-to-one correlation. Defining such a structure enables non-destructive playback order specification wherein only selected portions are played without changing the clip AV stream file.

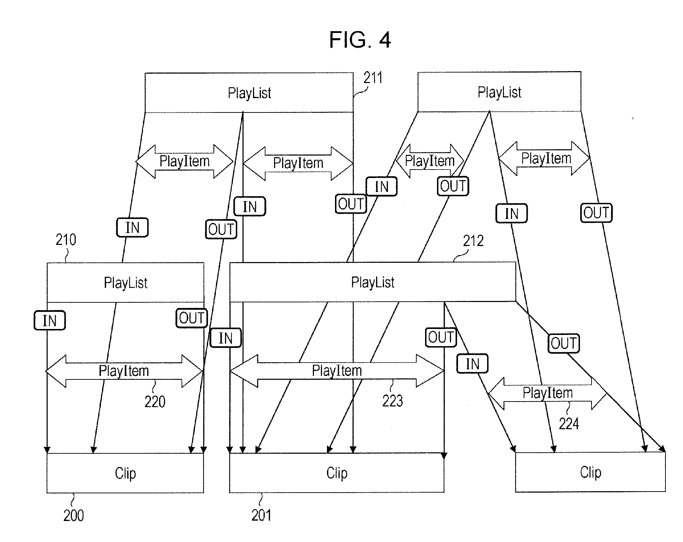

Also, as shown in Fig. 4, the same clip can be referenced from multiple playlists. Also, multiple clips can be specified from a single play list. A clip is referenced by an IN point and OUT point indicated by a play item in a playlist. In the example shown in Fig. 4, a clip 200 is referenced from a play item 220 of a playlist 210, and also has a section indicated by IN point and OUT point referenced by a play item 221 of play items 221 and 222 configuring the playlist 210. Also, a clip 201 has a section indicated by IN point and OUT point referenced from the play item 222 of the playlist 211, and a section indicated by IN point and OUT point of the play item 223 of play items 223 and 224 of the playlist 212 is referenced.

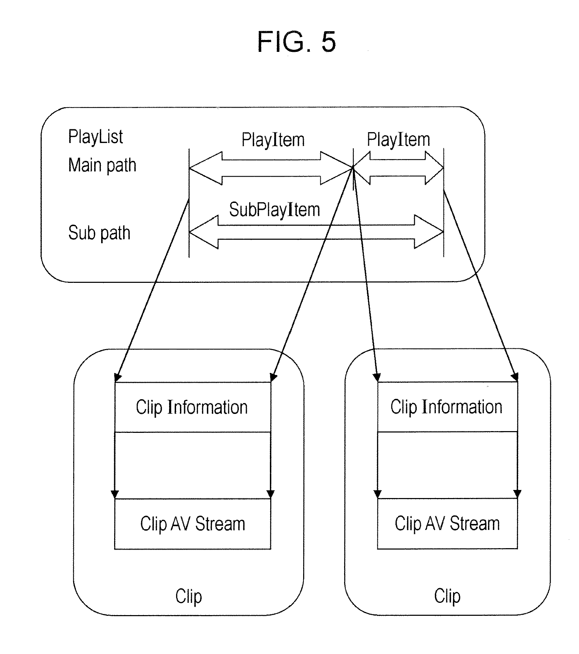

Note that a playlist can have a sub path corresponding to a sub play item, as juxtaposed to a main path corresponding to a play item which is primarily played, as exemplified in Fig. 5. For example, a post-recording play item provided to this playlist can be provided as a sub play item to this playlist. Though details will be omitted, playlists can have sub play items only in cases of satisfying predetermined conditions.

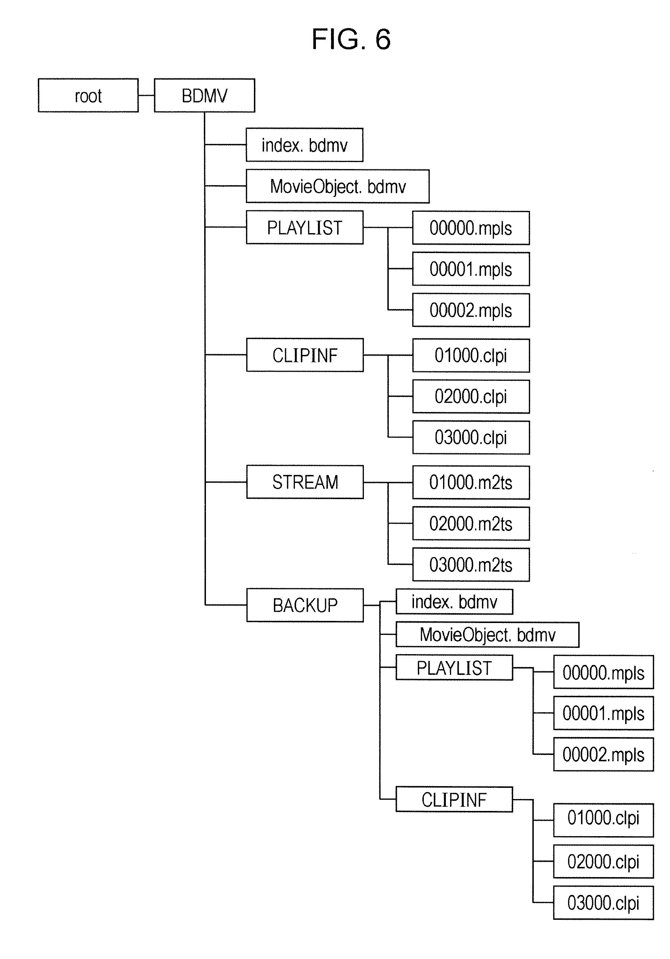

Next, the management structure of files recorded in the information recording media will be described with reference to Fig. 6. As described with reference to Fig. 2 through Fig. 4 and others, movie object (MovieObject), playlist (PlayList), and clip (Clip) are data recorded in the information recording media, and clip (Clip) includes the files clip information (ClipInformation) and clip AV stream (ClipAVStream). Files are hierarchically managed by a directory structure. First, one directory (root directory in the example in Fig. 6) is created on the recording medium. Beneath this directory is a range managed by a single recording/playback system.

Placed beneath the root directory is a directory [BDMV]. Immediately beneath the directory [BDMV] can be placed only the two of index file [index.bdmv] and movie object file [MovieObject.bdmv]. Also, playlist directory [PLAYLIST], clip information directory [CLIPINF], stream directory [STREAM], and directory [BACKUP] are placed beneath the BDMV directory [BDMV].

Described in the index file [index.bdmv] are the contents of the directory [BDMV]. Also, information of one or more movie objects is stored in the movie object file [MovieObject.bdmv].

The playlist directory [PLAYLIST] is a directory where a playlist database is placed. That is to say, the playlist directory [PLAYLIST] includes a playlist file [xxxxx.mpls] which is a file relating to a movie playlist. The playlist file [xxxxx.mpls] is a file created corresponding to each movie playlist. The [xxxxx] before the [.] (period) in the file name is five digits of numerals, and the [mpls] after the period is a suffix fixedly provided to this type of file.

The clip information directory [CLIPINF] is a directory placed in the database of the clip. That is to say, the clip information directory [CLIPINF] includes a clip information file [zzzzz.clpi] corresponding to each clip AV stream file. The [zzzzz] before the [.] (period) in the file name is five digits of numerals, and the [clpi] after the period is a suffix fixedly provided to this type of file.

The stream directory [STREAM] is a directory which an AV stream file which is an actual entity is placed. That is to say, the stream directory [STREAM] includes a clip AV stream file corresponding to each clip information file. A clip AV stream file is made up of an MPEG2 (Moving Pictures Experts Group 2) transport stream (hereafter abbreviated to MPEG2 TS), with a file name of [zzzzz.m2ts]. The [zzzzz] in the file name is the same as that in the corresponding clip information file, whereby the correlation of the clip information file and this clip AV stream file can be easily understood.

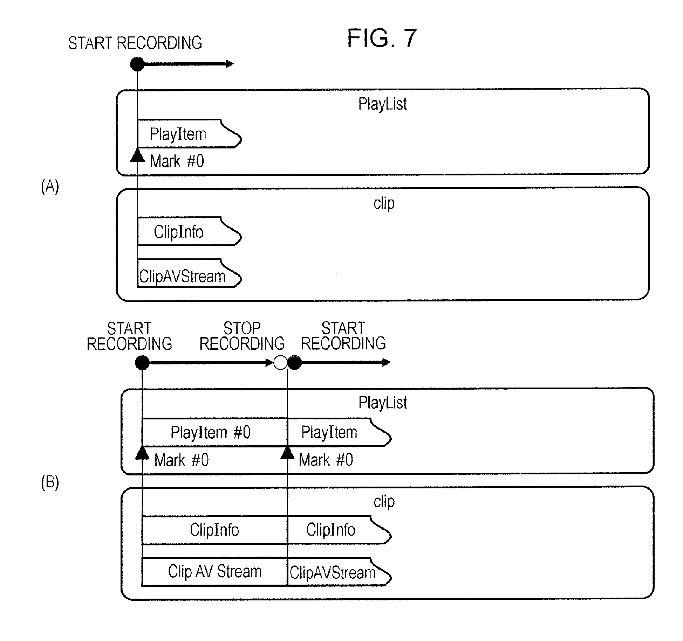

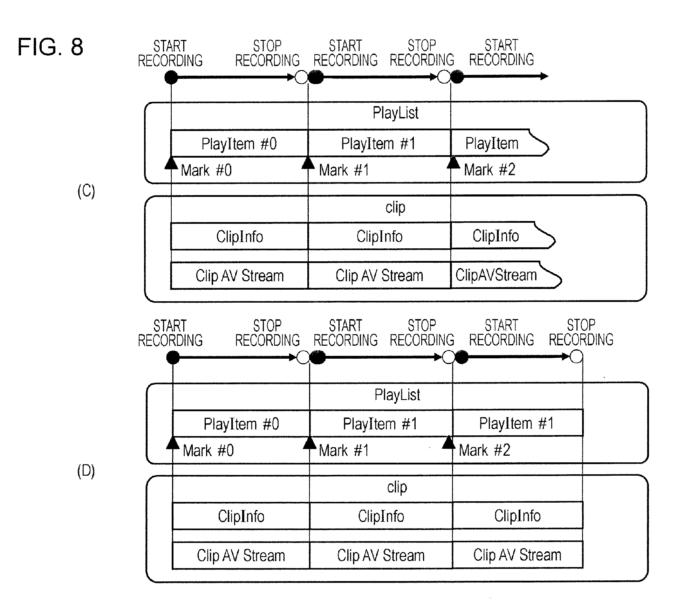

Next, procedures whereby a playlist is generated along with an AV stream clip following recording/shooting with a video camera will be described with reference to Fig. 7 and Fig. 8.

Fig. 7(a), (b), and Fig. 8 (c), (d) illustrate the processing of generating a clip and playlist in a case of a user repeatedly starting and stopping recording processing in the order of (a) through (d). As can be understood from Fig. 7 and Fig. 8, a play item is created for each section from the user starting recording to stopping recording. Also, one clip AV stream file is formed at the break of a recorded/shot stream, and a clip information file is also created accordingly. A clip is an increment regarding which continuous synchronized playback, i.e., playback needing real-time playback, is to be ensured.

Each time the user starts recording, a mark (Mark) serving as an entry mark (EM: entry mark) is added to the head of the play item (an entry mark within a playlist is also called a "playlist mark ((PLM)". Within a single playlist, play items and marks are assigned consecutive sequence numbers. Though there is a restriction that an entry mark is always at the head of a playlist corresponding to moving images, the position of entry marks on the time axis can be moved by predetermined editing operations.

Each entry mark (EM) is an entry position from which the user accesses the stream. Accordingly, sections sectioned between adjacent entry marks (EM: EntryMark) (and the send section of the play item at the very end from the last mark) are smallest editing increments as viewed from the user, i.e., "chapters". The playback order of a playlist is defined by arraying the play items in playback order, and arraying the entry marks in playback order.

### 3. Regarding Representative Image Obtaining Playback Processing Example Following AVCHD Format

As described above with reference to Fig. 2 through Fig. 6, with the AVCHD format, the files
index (index),
movie object (MovieObject),
playlist (PlayList),
clip information (ClipInformation), and
AV stream (ClipAVStream)
are generated and recorded in a database.

Contents serving as actual data are recorded in an AV stream file, and management information of various types corresponding to the contents are recorded in a database file configured of the index through clip information.

Data to be recorded in an AV stream file is encoded data, and is encoded data configured of a GOP (Group Of Picture) set as a picture group including a referenced picture, for example. An information processing device which performs playback performs processing of creating and displaying a list of representative images from the encoded data, a list of thumbnail images (reduced images) for example, at the time of displaying a playback list. In many cases, this list display processing is executed by selecting a referenced picture [I (Intra) picture] included in the GOP, and decoding it. This is because an I picture is a picture which can be decoded without referencing another picture, and accordingly decoding can be performed efficiently. In the AVCHD format, the referenced picture is called an IDR (Instantaneous Decoding Refresh) picture.

In the event of performing selection and display of such a referenced picture (IDR (I) picture), there is the need to obtain the recording position of the IDR (I) picture in the information recording medium from the management information file. For example, with data recorded following the above-described AVCHD format, management information is recorded in each of the attribute information files of index (index), movie object (MovieObject), playlist (PlayList), and clip information (ClipInoformation), and in the event of obtaining the recording position in the information recording medium of an IDR picture, these multiple files need to be accessed and the necessary information needs to be read in sequence. In the event of displaying a list of a great number of representative images for example, this will take a great amount of time, and make the user wait.

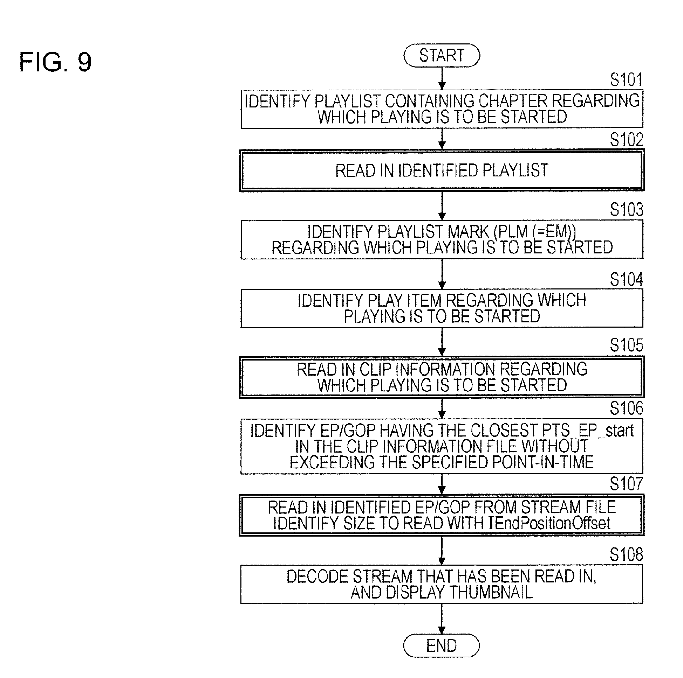

As a case of performing data read and playback from an information recording medium storing data recorded following the AVCHD format, description will be made regarding a processing sequence example of a case of selecting representative images from each chapter and displaying as thumbnail images, with reference to the flowchart shown in Fig. 9. The steps indicated with double lines in the flow in Fig. 9 correspond to file reading processing. Note that in the event that thumbnails are to be generated and displayed as a list for all chapters for example, the flow shown in Fig. 9 is to be repeatedly executed.

The flow shown in Fig. 9 is processing executed under control of the control of the recording/playback control unit 110 of the information processing device 100 shown in Fig. 1, for example. First, in step S101, a playlist is identified in which is recorded information relating to chapters including representative images to be played. In the event of displaying a thumbnail list corresponding to all chapters, processing will be performed in order from the head playlist.

As described earlier, playlists are provided corresponding to titles to be shown to the user, and are playback lists configured of at least one or more play items. Each play item has the playback section thereof specified by having a playback start point (IN point) and playback end point (OUT point) as to the clip.

In step S102, the identified playlist file is read in, and in step S103 a playlist mark serving as the playback start point is identified. An entry mark (EM: EntryMark) is assigned to the head of the play item. Note that as described earlier, an entry mark within a playlist is also called a "playlist mark (PLM)". In step S103, the playlist mark (PLM) (= entry mark (EntryMark)) corresponding to the playback start point is identified.

Next, in step S104, a play item including the picture to be played is identified. A play item is playback section specification information having a playback start point (IN point) and playback end point (OUT point) corresponding to the clip, and can be obtained from the playlist file.

Next, in step S105, a clip information file including the playback start point is read in. The clip information file name corresponding to the play item identified in step S104 can be obtained from the playlist file, and the clip information file is read in following the obtained clip information file name.

In step S106, reading of information recorded in the clip information file is executed, and the GOP (EP) having the playback time (PTS_EP_start) closest to the playback specification point-in-time (PTS: presentation time stamp) corresponding to the picture at the playback start point without exceeding this is identified.

Note that EP means entry point. A brief description will be given regarding entry points (EP). With encoded streams having inter-frame compression such as with MPEG streams, places where decoding can be started are determined by GOP (Group Of Picture), and decoding processing is performed in increments of GOPs. In the case of performing playback, information regarding a decodable playback start position is necessary. Information regarding the head position of decoding increments is recorded as entry points (EP).

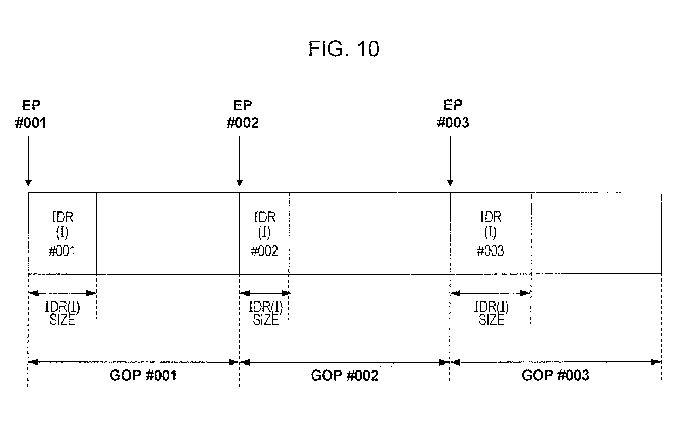

For example, Fig. 10 is a diagram illustrating a configuration example of stream data recorded in an information recording medium. The GOP #001, GOP #002, and GOP #003 each include encoded picture data, with IDR (I) picture information serving as referenced picture information being recorded at the head thereof.

The head position information of each GOP #001, GOP #002, and GOP #003 is recorded as an entry point (EP). The entry point (EP) information is recorded in a clip information file, and can be obtained from the clip information file. Reading data size equivalent to the size of the IDR (I) of the entry point (EP) executes reading of the encoded data of the referenced pictures included in each GOP, and decoding thereof enables representative images to be displayed.

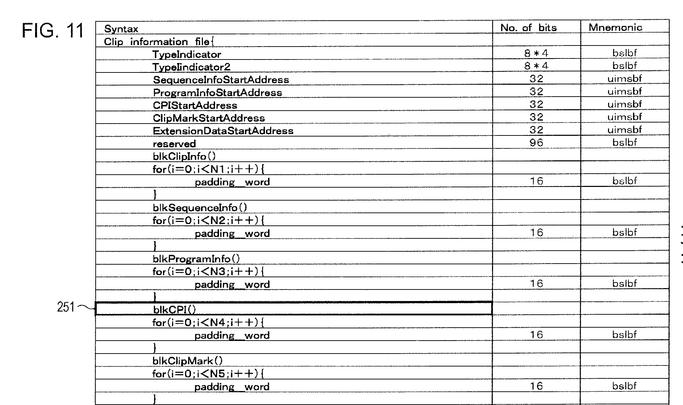

Fig. 11 shows the syntax of a clip information file. Clip information is a file defining attributes of an AV stream, including coding, size, time → address conversion, playback management information, time map, etc., with this information being recorded in the clip information corresponding to each referenced picture (IDR (I) picture).

In the clip information file shown in Fig. 11, the field [TypeIndicator] has a 32-bit data length, indicating that this file is a clip information file. The fields [SequenceInfoStartAddress] through [ExtensionDataStartAddress] each have 32-bit data lengths indicating the start addresses of the data blocks in this syntax. Start addresses are indicated by the number of bytes relative to the head byte stipulated in the file.

The clip informant block [blkClipInfo()] through clip mark block [blkClipMark()] record the substantial contents to be recorded in the clip information file. That is to say, information relating to the actual stream that is necessary for playing the stream is recorded.

An EP map is recorded in the CPU block [blkCPI()] 305 of the clip information file shown in Fig. 11, as entry point (EP) information corresponding to the referenced picture (IDR (I) picture). For example, presentation time stamps (PTS) of IDR (I) pictures are set every 0.5 seconds, and an EP map with EP (entry points) set each timing is generated and recorded. A playback time (PTS_EP_start) corresponding to each GOP (EP) is registered in the EP map. That is to say, presentation time stamp (PTS) information corresponding to the IDR (I) pictures which are referenced pictures included in each GOP (EP) is registered for each GOP (EP).

For example, in the event that playback from an arbitrary point-in-time with a playback device (player) is desired, the address within the file for this playback position is obtained by referencing the CPI of the clip information file based on the playback specification point-in-time (PTS). This address is the head of a decoding increment, so the player can read out data from that point and decode, and display an image.

Let us return to Fig. 9 and continue the description of the sequence of processing for obtaining and playing representative images. In step S106, reading of information recorded in the clip information file is executed, and the GOP (EP) having the playback time (PTS_EP_start) closest to the playback specification point-in-time (PTS: presentation time stamp) corresponding to the picture at the playback start point without exceeding this is identified, and in step S107, reading of a predetermined data size from the identified GOP (EP), i.e., data size corresponding to the size of the IDR (I) picture serving as the reference picture, is executed.

The data size of the IDR (I) picture differs depending on the GOP, with the data size of the IDR (I) picture in each GOP being recorded as [IEndPositionOffset] in the clip information file, so the read data size is determined by referring to this information, and read processing is executed.

The following is an example of [IEndPositionOffset] data representing the data size of an IDR (I) picture recorded in a clip information file.

**[Table 2]**

| Definition value | Size [BYTE] |
|---|---|
| 000b | Unknown |
| 001b | 0 ≤ I/IDR size < 131072 |
| 010b | 131072 ≤ I/IDR size < 262144 |
| 011b | 262144 ≤ I/IDR size < 393216 |
| 100b | 393216 ≤ I/IDR size < 589824 |
| 101b | 589824 ≤ I/IDR size < 917504 |
| 110b | 917504 ≤ I/IDR size < 1310720 |
| 111b | 1310720 ≤ I/IDR size |

A clip information file has one of the definition values 000b through 111b in the above table recorded in the [IEndPositionOffset] field. Each GOP has a different IDR size, with the IDR sizes of predetermined ranges each being set correlated to the definition values 000b through 111b. The device which executes playback processing executes reading processing wherein the data region including the IDR size corresponding to these definition values is set as the read data size.

Next, in step S108, the stream that has been read in is decoded and the decoded data of the representative image is obtained and displayed. In the case of displaying a thumbnail (reduced image) for example, thumbnail image creating processing is executed and displayed.

Thus, general processing regarding processing for obtaining and displaying a representative image from data recorded following the AVCHD format is executed following the flow shown in Fig. 9. Thus, in the event of obtaining and displaying a representative image, an IDR (I) picture needs to be obtained, and multiple files must be accessed and necessary information must be sequentially read. In the event of displaying a list of a great number of representative images for example, this will take a great amount of time, and make the user wait.

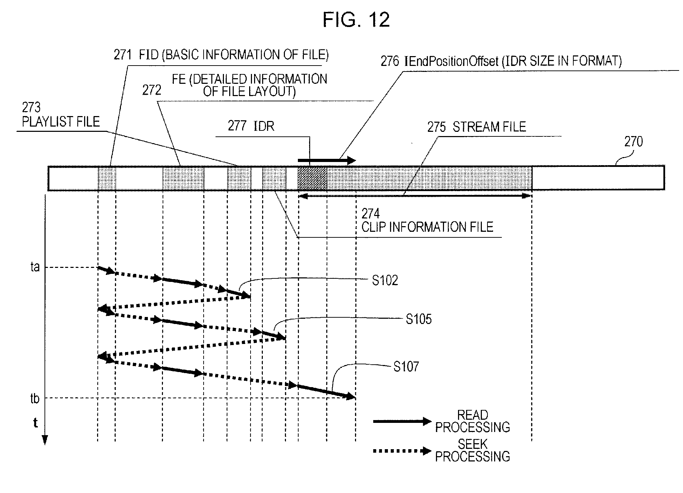

A processing sequence wherein, of the sequence of processing for obtaining and playing representative images described with reference to Fig. 9, the reading processing and seeking processing of data recorded in the information recording medium is specifically illustrated, will be described with reference to Fig. 12.

Fig. 12 schematically illustrates recording information 270 recorded in the information recording medium. Each of the files described above following the AVCHD format (index through stream files) are recorded in the recording information. The drawing illustrates only the files used for obtaining a representative image. These are the playlist file 273, the clip information file 274, and the stream file 275. The stream file stores data in increments of GOPs described earlier with reference to Fig. 10. Fig. 12 shows one IDR (referenced picture) 277 within the GOP to be read.

The IEndPositionOffset 276 shown in the drawing is the IDR read size that can be obtained from the clip information file. This is set larger than the actual IDR size. The recording information 270 further has recorded therein an FE 272 serving as layout information of files recorded in the AVCHD format, and FID 271 which is basic information of files.

At the time of accessing a file in the recording information 270, the FID 271 is first read, the FE 272 is obtained following the FID 271, the reading location of each file is obtained from the FE 272, and file access is executed.

The sequence of the file reading and seeking processing corresponding to the processing executed following the flow in Fig. 9 is the processing indicated by the solid lines and the dotted lines between time ta through tb shown in Fig. 12. The processing indicated by solid lines between time ta through tb is file reading processing, and the processing indicated by dotted lines is seeking processing.

The file reading processing and seeking processing shown in Fig. 12 will be described following the processing described with reference to the flow described with reference to Fig. 9. First, the processing in step S101 in the flow shown in Fig. 9 is processing for identifying a playlist recording the information relating to the chapter in which the representative image to be played is included, and the processing in step S102 is processing for reading in the identified playlist file.

The processing in step S102 is illustrated as the solid line portions in Fig. 12. At the time of reading in the playlist file in step S102 here, as shown in Fig. 12, the FID 271 is read in, access information of the FE 272 is obtained, seek processing is performed following the obtained information, reading of the FE 272 is executed, access information of the playlist file is obtained, seek processing following the obtained access information is executed, and reading processing of the playlist file in step S102 in Fig. 12 is performed.

Further, at the time of reading the playlist file, the processing of steps S103 and S104 in Fig. 9 is executed. In step S103, the playlist mark (PLM) (= entry mark (EntryMark)) corresponding to the playback start position is identified from the playlist, and in step S104, processing for identifying the play item including the picture to be played is performed. Next, in step S105, the clip information file including the playback start position is read in.

In the case of reading in the clip information file as well, as with the above case of reading in the playlist file, as shown in Fig. 12, the FID 271 is read in, the access information of the FE 272 is obtained, seeking processing following the obtained information is performed, the FE 272 is read, access information of the clip information file is obtained, seeking processing following the obtained access information is executed, and the clip information file is read in step S105 shown in Fig. 12.

In the clip information file reading processing, the processing of step S106 of the flowchart shown in Fig. 9, i.e., information reading recorded in the clip information file is executed, and processing is performed for identifying the GOP (EP) having the playback time (PTS_EP_start) closest to the playback specification point-in-time (PTS: presentation time stamp) corresponding to the picture at the playback start point without exceeding this. Next, in step S107, reading of a predetermined data size from the identified GOP (EP), i.e., data size corresponding to the size of the IDR (I) picture serving as the reference picture, is executed.

In the case of reading in the IDR as well, as shown in Fig. 12, the FID 271 is read in, the access information of the FE 272 is obtained, seeking processing following the obtained information is performed, the FE 272 is read, access information of the stream file is obtained, seeking processing following the obtained access information is executed, and the stream file is read in step S107 shown in Fig. 12.

Note that the data reading in this step S107 is executed following the IEndPositionOffset 276, which is the recording information of the clip information file, and data reading is performed with leeway, greater than the actual IDR size.

Thus, in order to complete reading processing of a single IDR, there is the need to perform processing to read, analyze, and seek a great number of files, taking a long time. Particularly, in the event of displaying a list of a great number of representative images for example, the processing shown in Fig. 12 is repeated which will take a great amount of time, and make the user wait.

With the present invention, in order to solve this problem, a configuration has been made wherein information necessary for reading a representative image is recorded in an attribute information file stipulated in the AVCHD format as representative image access information, enabling accessing and playback of representative images to be executed speedily. The following is a detailed description of this processing configuration.

### 4. Recording and Usage Configuration of Representative Image Access Information

As described above, it has been necessary, in order to obtain information necessary for obtaining representative images from files recorded in the current AVCHD format, to obtain multiple files following a certain sequence, and sequentially obtaining the necessary information, which has been inefficient. In order to solve this problem, the present invention is of a configuration wherein information necessary for reading representative images is recorded together in a single attribute information file stipulated in the AVCHD format and recorded as "representative image access information".

According to this configuration, at the time of performing playback processing of representative images, such as a list display of a thumbnail list of representative images of each chapter for example, efficient processing is realized by referencing this representative image access information and reading the representative images at high speed.

Embodiments of two recording region setting configurations described below, as recording regions of representative image access information, will each be described below.
(4-1) Embodiment of Recording Representative Image Access Information in a Maker's Information (MakersInformation) Region in Increments of Playlist Marks in a Playlist File
(4-2) Embodiment of Recording Representative Image Access Information in a Maker's Private Data (MakersPrivateData) Region in Index File

### (4-1) Embodiment of Recording Representative Image Access Information in a Maker's Information (MakersInformation) Region in Increments of Playlist Marks in a Playlist File

First, an embodiment wherein representative image access information is recorded in a maker's information (MakersInformation) region in a clip information file will be described.

As described earlier with reference to Fig. 2 through Fig. 6, with the AVCHD format, files which are index (index), movie object (MovieObject), play list (PlayList), clip information (ClipInformation), and clip AV stream (CLipAVStream) are generated and recorded.

Playlist files are provided corresponding to titles to be shown to the user, and are playback lists configured of at least one or more play items. Each play item has the playback section thereof specified by having a playback start point (IN point) and playback end point (OUT point) as to the clip, thereby specifying the playback section.

Maker's information (MakersInformation) regions are set in playlist files stipulated by the AVCHD format, in increments of playlist marks (PLM) such as entry marks (EM) indicating chapter sections or the like. A maker's information (MakersInformation) region is a region where the maker of the data recording device which performs data recording processing is permitted to freely write information.

With the present embodiment, information necessary for accessing a representative image, i.e., representative image access information used for reading an IDR (I) picture set as a referenced picture in a GOP, is recorded in the maker's information (MakersInformation) region in increments of playlist marks of the playlist file.

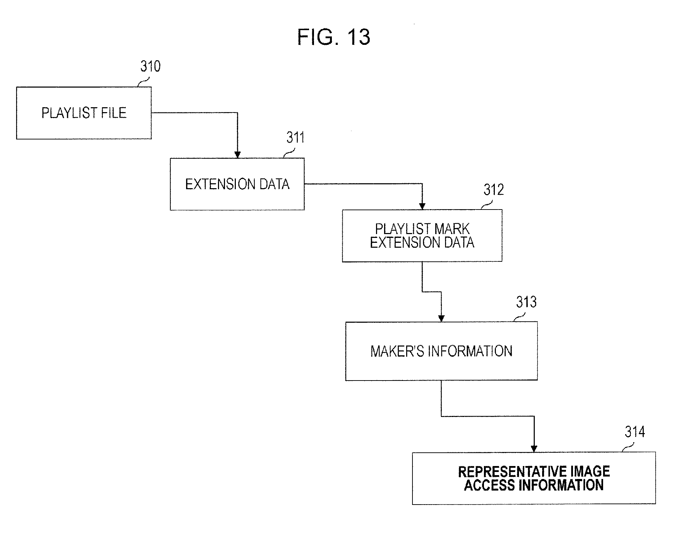

The representative image access information write region in a playlist file will be described with reference to Fig. 13. As shown in Fig. 13, a playlist file 310 stores an extension data region (ExtentionData) 311, and a playlist mark extension region (PLM Extension Data) which is an extension data region in increments of playlist marks (PLM) is set in the extension data region (ExtentionData) 311.

Note that a playlist mark (PLM) is a concept including entry marks (EM) serving as marks stipulating chapters, and link points indicating playback start positions not corresponding to chapters, and multiple playlist marks (PLMs) can be recorded in a single playlist. However, the number or playlist marks and the number of entry marks recordable in a single playlist each have an upper limit in the format (e.g., 999).

Thus, multiple playlist marks can be set in a single playlist, and playlist mark extension data (PLM Extension Data) 312 regions corresponding to the multiple playlist marks are set.

A maker's information (MakersInformation) region 313 is set for each playlist mark extension data 312. This maker's information region 313 is set as a data recording region where the maker of the data recording device which performs data recording and editing processing is permitted to freely write information.

The above-described representative image access information 314, i.e., the representative image access information necessary for reading an IDR (I) picture set as a referenced picture in the GOP, is recorded in this maker's information region 313.

Examples of representative image access information to be recorded in the maker's information (MakersInformation) region in increments of playlist marks of the playlist file is shown below.

**Table 3**

| Data size | Name of variable | Meaning |
|---|---|---|
| 32 bit | IDR_LSN | LSN recording data of IDR indicated by PlayListMark FFFFFFFFh is stored if unknown |
| 32 bit | IDR_SIZE | Data size [BYTE] of IDR indicated by PlayListMark 00000000h is stored if unknown |
| 64 bit | RESERVED | Reserved (ALL 0) |

As shown in the table above, the representative image access information includes
IDR_LSN (IDR logical sector No.), and
IDR_SIZE (IDR size).

The IDR_LSN (IDR logical sector No.) records the logical sector No. of the IDR (I) picture serving as the referenced picture included in the GOP corresponding to the playlist mark (PLM), i.e., the logical address of the IDR (I) picture.

In the event that data recording or editing is executed at the information processing device and IDR writing is performed, this information is recorded based on this write address information. At the time of playback, the IDR write start position can be seeked immediately by obtaining this address information. Note that in the event that the IDR logical sector No. is unknown, FFFFFFFFh is recorded.

The IDR_SIZE stores the data size of the IDR (I) picture serving as the referenced picture included in the GOP corresponding to the playlist mark (PLM). With this size information also, in the event that data recording or editing is executed at the information processing device, the data size of the recorded or updated IDR is obtained, and the actual IDR size is recorded as IDE_SIZE (IDR size) information. Accordingly, the accurate byte size data corresponding to each IDR is written. Note that in the event that the data size is unknown, 00000000h is recorded.

Note that with the information processing device, the timing at which the representative image access information is recorded in the maker's information (MakersInformation) region in increments of playlist marks of the playlist file is, specifically, the timing at which new data recording or data editing is performed and an IDR (I) picture is newly recorded or updated. The information processing device which performs data recording or data editing performs updating processing of database files following the AVCHD format in accordance with data recording and editing, and also executes processing for recording the representative image access information including the above IDR_LSN (IDR logical sector No.) and IDR_SIZE (IDR size) in the maker's information (MakersInformation) region in increments of playlist marks of the playlist file, under control of the recording/playback control unit 110 (see Fig. 1) which performs data recording processing control as to the information recording medium.

For example, the recording/playback control unit 110 of the information processing device 100 shown in Fig. 1 performs control for recording encoded data in which is set GOPs (Group Of Picture) configured of picture groups and recording control of management information corresponding to the recorded data, and further performs control for recording the representative image access information to be applied to reading of representative images of data sections set in the recording data, into an attribute information file following the recording format, i.e., into the maker's information (MakersInformation) region in increments of playlist marks of the playlist file, in the AVCHD recording format which is a data recording format having a hierarchical management configuration stipulated beforehand.

That is to say, the recording/playback control unit 110 executes control to record
address information to be applied to reading of the IDR picture, and the data size of the IDR picture, i.e.,
IDR_LSN (IDR logical sector No.), and
IDR_SIZE (IDR size),
as representative image access information serving as information to be applied to reading to the referenced picture (IDR (I) picture) set as representative images in increments of chapters set by playlist marks which are playback section information,
in the maker's information (MakersInformation) region in increments of playlist marks of the playlist file.

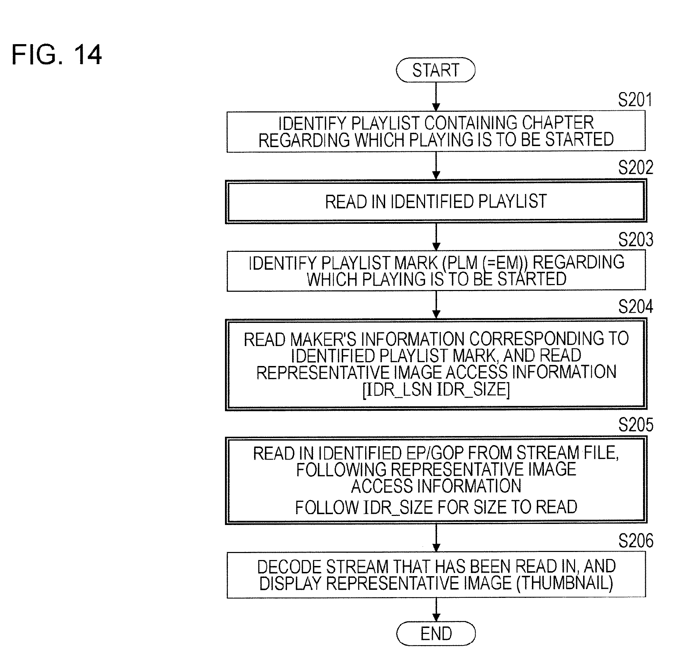

Next, description will be made regarding a playback processing sequence applying this representative image access information with reference to the flowchart shown in Fig. 14. In the same way as described with reference to the flow in Fig. 9 earlier, the processing flow in Fig. 14 is an example of reading and playing data from an information recording medium storing data recorded following the AVCHD format, and is a processing sequence of a case of selecting representative images from each chapter sectioned by playlist marks (PLM (= EM)) for example and displaying as thumbnail images. Note that the steps indicated with double lines in the flow in Fig. 14 correspond to file reading processing.

The flow shown in Fig. 14 is processing executed under control of the recording/playback control unit 110 of the information processing device 100 shown in Fig. 1, for example. First, in step S201, a playlist is identified in which is recorded information relating to chapters including representative images to be played. In the event of displaying a thumbnail list corresponding to all chapters, processing will be performed in order from the head playlist.

As described earlier, playlists are provided corresponding to titles to be shown to the user, and are playback lists configured of at least one or more play items. Each play item has the playback section thereof specified by having a playback start point (IN point) and playback end point (OUT point) as to the clip.

In step S202, the identified playlist file is read in. With the present embodiment, the above-described representative image access information, i.e.,
IDR_LSN (IDR logical sector No.), and
IDR_SIZE (IDR size),
are recorded in the maker's information (MakersInformation) region in increments of playlist marks (PLM) set in the playlist file.

In step S203 a playlist mark (PLM) including the representative image to be played is identified from the playlist file, and in step S204, the maker's information corresponding to the identified playlist mark (PLM) is read and the above-described representative image access information is read. That is to say, reading of the information
IDR_LSN (IDR logical sector No.), and
IDR_SIZE (IDR size),
is executed.

Next, in step S205, the identified GOP (EP) is accessed applying the IDR_LSN (IDR logical sector No.) which is the address information obtained following the representative image access information, and data is read following the IDR_SIZE (IDR size). With this processing, reading of the stream data including the IDR is executed.

Next, in step S206, the stream that has been read in is decoded and the decoded data of the representative image is obtained and displayed. In the case of displaying a thumbnail (reduced image) for example, thumbnail image creating processing is executed and displayed.

Thus, with the present embodiment, address information (IDR_LSN (IDR logical sector No.)) and data size information (IDR_SIZE (IDR size)) which are information necessary for IDR reading can be obtained from the playlist file, and these information can be applied to access the AV stream file immediately and read the IDR.

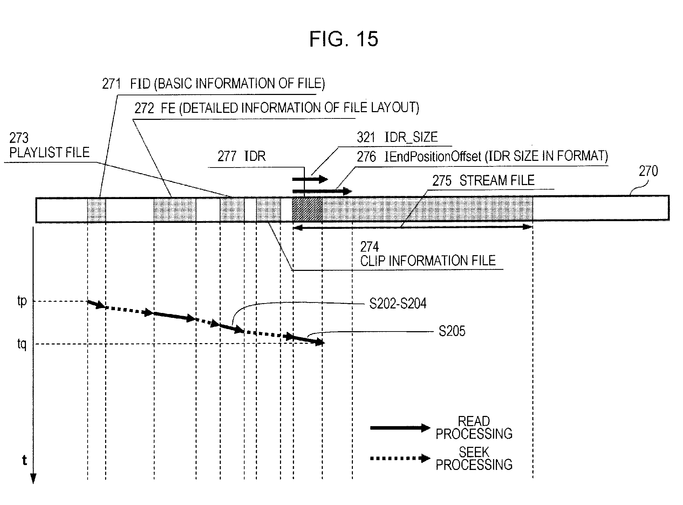

Next, a specific processing sequence wherein processing according to the flow in Fig. 14 has been differentiated into recording data reading processing and seeking processing will be described as a specific processing sequence with reference to Fig. 15.

As with the description made earlier with reference to Fig. 12, Fig. 15 schematically illustrates recording information 270 recorded in the information recording medium. Each of the files described above following the AVCHD format (index through stream files) are recorded in the recording information. The drawing illustrates the playlist file 273, the clip information file 274, and the stream file 275. The stream file stores data in increments of GOPs described earlier with reference to Fig. 10. Fig. 15 shows one IDR (referenced picture) 277 within the GOP to be read.

The IEndPositionOffset 276 shown in the drawing is the IDR read size that can be obtained from the clip information file. This is set larger than the actual IDR size. The recording information 270 further has recorded therein an FE 272 serving as layout information of files recorded in the AVCHD format, and FID 271 which is basic information of files.

Further, Fig. 15 shows
IDR_SIZE (IDR size) 321
included in the above-described representative image access information, i.e., the representative image access information recorded in the maker's information (MakersInformation) region in increments of playlist marks (PLM) set in the playlist file.
This IDR_SIZE (IDR size) 321 is data corresponding to the size of each IDR actually recorded in the recording medium as described above, and is set so as to be smaller than the IEndPositionOffset 276 which is the IDR read size obtainable from the clip information.

As described above with reference to Fig. 12, at the time of accessing a file in the recording information 270, the FID 271 is first read, the FE 272 is obtained following the FID 271, the reading location of each file is obtained from the FE 272, and file access is executed.

The sequence of the file reading and seeking processing corresponding to the processing executed following the flow in Fig. 14 is the processing indicated by the solid lines and the dotted lines between time tp through tq shown in Fig. 15. The processing indicated by solid lines between time tp through tq is file reading processing, and the processing indicated by dotted lines is seeking processing.

The file reading processing and seeking processing shown in Fig. 15 will be described following the processing described with reference to the flow described with reference to Fig. 14. First, the processing in step S201 in the flow shown in Fig. 14 is processing for identifying a playlist recording the information relating to the chapter in which the representative image to be played is included, and the processing in steps S202 through S204 is processing for reading in the identified playlist file, identifying the playlist mark (PLM) including the representative image to be played, reading marker's information corresponding to the identified playlist mark (PLM), and obtaining the above-described representative image access information. That is to say, this is processing for executing reading of the information of
IDR_LSN (IDR logical sector No.), and
IDR_SIZE (IDR size).

The processing in steps S202 through S204 is shown as solid lines in Fig. 15. The representative image access information, i.e., the IDR_LSN (IDR logical sector No.) and IDR_SIZE (IDR size), are obtained in by the reading of the play list file in the steps S202 through S204.

Accordingly, with the information processing device, the write region of the identified GOP (EP) can be seeked applying the IDR_LSN (IDR logical sector No.) which is the address information obtained following the representative access information, and read data of the size following the IDR_SIZE (IDR size). This IDR reading processing is the processing shown as a solid line for step S205 in Fig. 15.

Note that the data reading in step S205 is executed as data reading of a size following the IDR_SIZE (IDR size). The IDR reading processing described with reference to Fig. 12 earlier is executed following the IEndPositionOffset 276 which is the recording information of the clip information file, and data reading is performed with leeway, greater than the actual IDR size, but with the present embodiment, the IDR_SIZE (IDR size) included in the representative image access information recorded in the play list is of a data size equivalent to the data size of the actual IDR, whereby the IDR information can be read in a sure manner without wasteful reading of data region, and the reading time is also shortened.

With the above-described processing example in Fig. 12, in the event of performing IDR reading, this is a sequence of reading the playlist file, reading the clip information file, reading the stream file, and reading the individual information of FID and FE in the event of going to read each file, which has been inefficient processing, but with the IDR reading processing following the present invention shown in Fig. 15, the target IDR (I) picture can be read simply by executing the processing sequence of
FID → FE → playlist file → stream file
and reading of the IDR (I) picture serving as the representative image can be performed efficiently in a short time.
Picture reading of the target IDR (I) picture is enabled simply by executing this processing sequence, and reading processing of the IDR (I) serving as the representative image can be executed efficiently in a short time. Also, reading processing of the stream file is performed with data size corresponding to the actual IDR size having been read, with no extra data read, thereby realizing even further reduction in processing time.

### (4-2) Embodiment of Recording Representative Image Access Information in a Maker's Private Data (MakersPrivateData) Region in Index File

Next, an embodiment of recording representative image access information in a maker's private data (MakersPrivateData) region of an index file will be described.

As described earlier with reference to Fig. 2 through Fig. 6, with the AVCHD format, files which are index (index), movie object (MovieObject), play list (PlayList), clip information (ClipInformation), and clip AV stream (CLipAVStream) are generated and recorded.

The index file manages the correlation with movie objects. With the AVCHD format, the playback order of a playlist which originally should be managed with the movie object file, is managed within the metadata of the index file. Upon the information recording medium being mounted to the player, the index is first read in, and the user can view the title described in the index.

With the configuration according to the present embodiment, the above-described representative image access information, i.e., representative image access information necessary for reading the IDR (I) picture set as the referenced picture in the GOP, is recorded in the maker's private data region of the index file.

The recording data of the index file is subjected to reading processing by the device to which the data recording media is mounted at the time of starting up the media, and stored in memory (RAM) of the device. Accordingly, in the event of playing data, recording data of the index file can be obtained from memory, thereby enabling speedy processing.

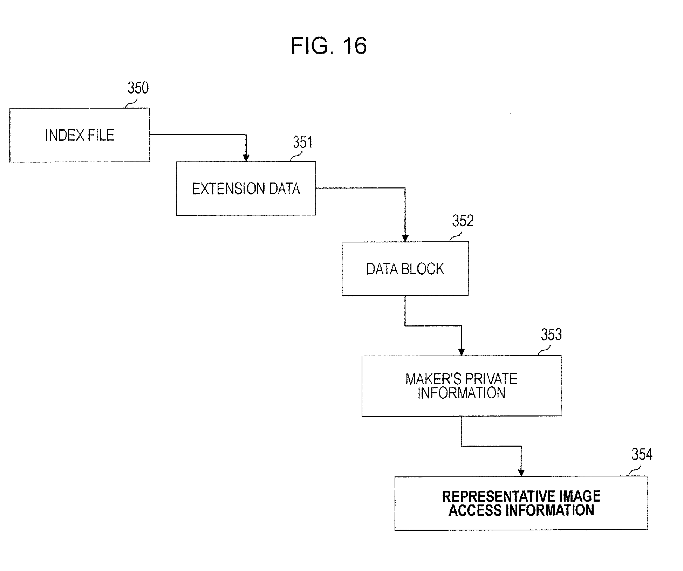

A write region for representative image access information in an index file will be described with reference to Fig. 16. As shown in Fig. 16, an index file 350 stores an extension data region (ExtentionData) 351, a data block 352 is set in the extension data region (ExtentionData) 351, and a maker's private data (Makers Private Data) 353 region is set in the data block 352. This maker's private data region 353 is a region set as a region where the maker of the data recording device which performs data recording or editing processing is permitted to freely write information.

The maker's private data region 353 stores the above-described representative image access information 354, i.e., representative image access information necessary for reading the IDR (I) picture set as the referenced picture in the GOP.

Examples of representative image access information to be recorded in the maker's private data (MakersPrivateData) region of an index file are shown below.

**Table 4**

| Data size | | Name of variable | Meaning |
|---|---|---|---|
| 16 bit | | NUM_OF_CHAPTER | The number of chapters recorded in media |
| ×N1 | 8 bit | IDR_LSN | LSN recording data of IDR indicated by chapter FFFFFFFFh is stored if unknown |
| | 32 bit | IDR_SIZE | Data size [BYTE] of IDR indicated by chapter 00000000h is stored if unknown |

As shown in the table above, in the same way as the playlist file recording information described earlier, the representative image access information includes
IDR_LSN (IDR logical sector No.), and
IDR_SIZE (IDR size).
Note however, that the index file records representative image access information corresponding to individual IDRs corresponding to multiple chapters, so
NUM_OF_CHJAPTER (number of chapters)
is recorded as chapter information, and there are N sets of data corresponding to the number of chapters (N) recorded of the
IDR_LSN (IDR logical sector No.), and
IDR_SIZE (IDR size).

The IDR_LSN (IDR logical sector No.) records the logical sector No. of the IDR (I) picture serving as the referenced picture included in the GOP corresponding to the playlist mark (PLM), i.e., the logical address of the IDR (I) picture, and
the IDR_SIZE (IDR size) is the data size of the IDR (I) picture serving as the referenced picture included in the GOP corresponding to the playlist mark.

In the event that recording or editing of data is performed at the information processing device and an IDR is written, these information are recorded based on the write address and data size thereof. At the time of playback the address information and data size can be obtained, the write start position of the IDR be immediately seeked, and the data size equivalent to the IDR size be obtained, enabling speedy processing.

Note that with the information processing device, the timing at which the representative image access information is recorded in the maker's private data (MakersPrivateData) region in the index file is, specifically, the timing at which new data recording or data editing is performed and an IDR (I) picture is newly recorded or updated. The information processing device which performs data recording or data editing performs updating processing of database files following the AVCHD format in accordance with data recording and editing, and also executes processing for recording the representative image access information including the above IDR_LSN (IDR logical sector No.) and IDR_SIZE (IDR size) in the maker's private data (MakersPrivateData) region in the index file, under control of the recording/playback control unit 110 (see Fig. 1) which performs data recording processing control as to the information recording medium.

For example, the recording/playback control unit 110 of the information processing device 100 shown in Fig. 1 performs control for recording encoded data in which is set GOPs (Group Of Picture) configured of picture groups and recording control of management information corresponding to the recorded data, and further performs control for recording the representative image access information to be applied to reading of representative images of data sections set in the recording data, into an attribute information file following the recording format, i.e., into the maker's private data (MakersPrivateData) region in the index file, in the AVCHD recording format which is a data recording format having a hierarchical management configuration stipulated beforehand.

That is to say, the recording/playback control unit 110 executes control to record
address information to be applied to reading of the IDR picture, and the data size of the IDR picture, i.e.,
IDR_LSN (IDR logical sector No.), and
IDR_SIZE (IDR size),
as representative image access information serving as information to be applied to reading to the referenced picture (IDR (I) picture) set as representative images in increments of chapters set by playlist marks which are playback section information,
in the maker's private data (MakersPrivateData) region in the index file.

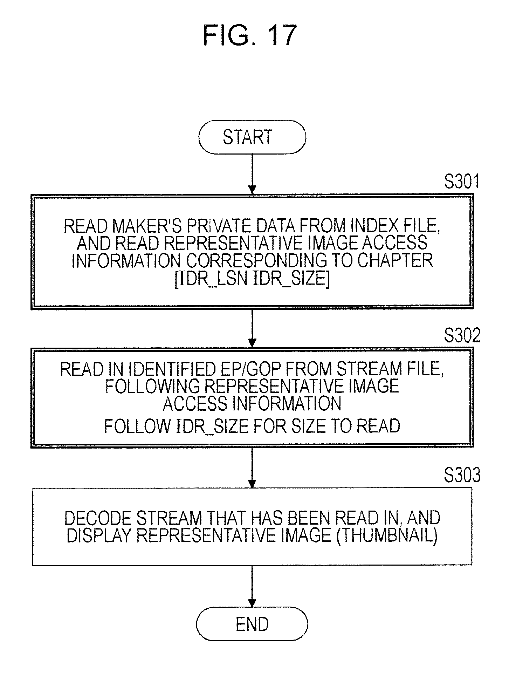

Next, description will be made regarding a playback processing sequence applying this representative image access information, with reference to the flowchart shown in Fig. 17. In the same way as described with reference to the flow in Fig. 9 and Fig. 14 earlier, the processing flow in Fig. 17 is an example of reading and playing data from an information recording medium storing data recorded following the AVCHD format, and is a processing sequence of a case of selecting representative images from each chapter sectioned by playlist marks (PLM (= EM)) for example and displaying as thumbnail images. Note that the steps indicated with double lines in the flow in Fig. 17 correspond to file reading processing.

The flow shown in Fig. 17 is processing executed under control of the recording/playback control unit 110 of the information processing device 100 shown in Fig. 1, for example. First, in step S301, the maker's private data is read from the index file, and representative image access information corresponding to the chapter is read. That is to say, the information
IDR_LSN (IDR logical sector No.), and
IDR_SIZE (IDR size)
are read.

As described above, the recording data of the index file is subjected to reading processing by the device to which the data recording media is mounted at the time of starting up the media, and stored in memory (RAM) of the device. Accordingly, recording data of the index file can be obtained from the memory, and the above-described representative image access information can also be obtained from the memory.

Next, in step S302, the identified GOP (EP) is accessed applying the IDR_LSN (IDR logical sector No.) which is the address information obtained following the representative image access information, and data is read following the IDR_SIZE (IDR size). This processing executes reading of the stream data including the IDR.

Next, in step S303, the stream that has been read in is decoded and the decoded data of the representative image is obtained and displayed. In the case of displaying a thumbnail (reduced image) for example, thumbnail image creating processing is executed and displayed.

Thus, with the present embodiment, address information (IDR_LSN (IDR logical sector No.)) and data size information (IDR_SIZE (IDR size)) which are information necessary for reading the IDR can be obtained from the index file, and these information can be applied to access the AV stream file immediately and read the IDR.

With the above-described processing example in Fig. 12, in the event of performing IDR reading, this is a sequence of reading the playlist file, reading the clip information file, reading the stream file, and reading the individual information of FID and FE in the event of going to read each file, which has been inefficient processing, but with the present processing example, the target IDR (I) picture can be read simply by executing the processing sequence of
obtaining index file recording information from memory → stream file
and reading of the IDR (I) picture serving as the representative image can be performed efficiently in a short time. Also, reading processing of the stream file is performed with data size corresponding to the actual IDR size having been read, with no extra data read, thereby realizing even further reduction in processing time.

While the present invention has been described above in detail with reference to specific embodiments, it is self-evident that one skilled in the art can make modifications and substitutions of the embodiments without departing from the essence of the present invention. That is to say, the present invention has been disclosed exemplarily, and should not be interpreted restrictively. Determination of the essence of the present invention should be made taking into consideration the section of the Claims listed at the beginning.

Note that the series of processing described in the specification can be executed by hardware, or software, of a combined configuration of both. In the event of executing the processing with software, a program recording the processing sequence can be installed in memory in a computer built into dedicated hardware and executed, or a program can be installed in a general-purpose computer capable of executing various types of processing and executed.

For example, the program can be recorded beforehand in a hard disk or ROM (Read Only Memory) serving as a recording medium. Or, the program can be temporarily or permanently stored (recorded) in a removable recording medium such as a flexible disk, CD-ROM (Compact Disc Read Only Memory), MO (Magneto optical) disk, DVD (Digital Versatile Disc), magnetic disk, semiconductor memory, or the like. Such removable recording media can be provided as so-called packaged software.

Note that in addition to being installed from such above-described removable recording media to a computer, the program can be transferred to the computer from a download site wirelessly or to the computer by cable via a network such as a LAN (Local Area Network), the Internet, or the like, with the computer receiving the program being transferred in this way and installing in a recording medium such as a built-in hard disk or the like.

Note that in addition to the various types of processing described in the specification being executed in time-sequence following the description, these may be executed in parallel or individually, according to processing capabilities of the device executing the processing or as necessary. Also, system as used in the present specification is a logical group configuration of multiple devices, and is not restricted to each component device being within the same housing.

### Industrial Applicability

As described above, according to the configuration of an embodiment of the present invention, representative image access information including address information and reading data size information to be applied to reading of a representative image are recorded in a playlist file or index file, as access information of a referenced image (IDR) serving as a representative image set corresponding to a chapter for example, so in the event of performing reading/playback of representative images such as a thumbnail list display in playback processing, processing making reference to the representative image access information is enabled, thereby enabling IDR reading/playback to be performed effectively and speedily.

## Claims

1. An information processing device **characterized in** having a control unit for performing data recording processing control as to an information recording medium;
wherein said control unit is of a configuration for performing data recording control in accordance with a data recording format having a predetermined hierarchical management configuration that has been stipulated beforehand, and being of a configuration for performing control for recording representative image access information to be applied to reading of a representative image of a data section set in recorded data in an attribute information file in accordance with said recording format.

2. The information processing device according to Claim 1, **characterized in** said control unit being of a configuration for performing recording of encoded data in which GOPs (Group Of Pictures) configured of picture groups have been set, and recording control of management information corresponding to recorded data;
wherein said control unit is of a configuration for performing control of recording information to be applied to reading of a referenced picture to be set as a representative image in increments of chapter to be set with a mark serving as playback section information in said attribute information file as representative image access information.

3. The information processing device according to Claim 1, **characterized in** said control unit being of a configuration for performing control of recording address information and data size information to be applied to reading of a representative image in said attribute information file as said representative image access information.

4. The information processing device according to Claim 1, **characterized in** said control unit being of a configuration for performing data recording control following the AVCHD format;
wherein said control unit is of a configuration for performing control of recording information to be applied to reading of an IDR (Instantaneous Decoding Refresh) picture which is a referenced picture to be set as a representative image in increments of chapter to be set with a playlist mark stipulated with the AVCHD format as playback section information in said attribute information file as representative image access information.

5. The information processing device according to Claim 4, **characterized in** said representative image access information being an IDR logical sector number serving as address information to be applied to reading of said IDR picture, and an IDR size which is the data size of said IDR picture.

6. The information processing device according to Claim 1, **characterized in** said control unit being of a configuration for performing data recording control following the AVCHD format which is a data recording format having a hierarchical management configuration that has been stipulated beforehand;
wherein said control unit is of a configuration for performing control of recording said representative image access information in an attribute information file storing attribute information that is stipulated with said AVCHD recording format.

7. The information processing device according to Claim 6, **characterized in** said control unit being of a configuration for performing control of recording said representative image access information in a playlist file or index file which is stipulated with said AVCHD recording format.

8. The information processing device according to Claim 7, **characterized in** said control unit being of a configuration for performing control of recording said representative image access information in a write-permitted region of maker-corresponding information set in a playlist file or index file which is stipulated with said AVCHD recording format.

9. An information processing device for executing playback processing of data recorded in an information recording medium following a data recording format having a hierarchical management configuration that has been stipulated beforehand, **characterized in** having a control unit for performing playback control of data recorded in an information recording medium;
wherein said control unit is, with representative image reading processing of the data section set in the recorded data of an information recording medium, of a configuration for obtaining representative image access information including the address information and reading data size information of a representative image recorded in an attribute information file stipulated with said recording format, and performing reading of the representative image following the obtained representative image access information.

10. The information processing device according to Claim 9,
**characterized in** the data recorded in an information recording medium being encoded data in which GOPs (Group Of Pictures) configured of picture groups have been set;
wherein said control unit is of a configuration for performing processing to which said representative image access information is applied at the time of reading of a referenced picture to be set as a representative image in increments of chapter set with a mark serving as playback section information.

11. The information processing device according to Claim 9, **characterized in** said control unit being of a configuration for performing playback control of recorded data following the AVCHD format;
wherein said control unit is of a configuration for performing processing to which said representative image access information is applied at the time of reading of an IDR (Instantaneous Decoding Refresh) picture which is a referenced picture to be set as a representative image in increments of chapter to be set with a playlist mark stipulated with the AVCHD format as playback section information.

12. The information processing device according to Claim 11, **characterized in** said representative image access information being an IDR logical sector number serving as address information to be applied to reading of said IDR picture, and an IDR size which is the data size of said IDR picture.

13. The information processing device according to Claim 9, **characterized in** said control unit being of a configuration for performing playback control of recorded data following the AVCHD format which is a data recording format having a hierarchical management configuration that has been stipulated beforehand;
wherein said control unit is of a configuration for obtaining representative access information recorded in a playlist file or index file stipulated with said AVCHD recording format, and performing reading of the representative image following the obtained representative image access information.

14. The information processing device according to Claim 13, **characterized in** said control unit being of a configuration for obtaining representative image access information recorded in a write-permitted region of maker-corresponding information set in a playlist file or index file which is stipulated with said AVCHD recording format, and performing reading of the representative image following the obtained representative image access information.

15. An information processing method **characterized in** performing data recording processing control as to an information recording medium with an information processing device;
wherein a control unit performs data recording control following a data recording format having a hierarchical management configuration that has been stipulated beforehand, and performs control of recording representative image access information to be applied to reading of a representative image of a data section set in recorded data in an attribute information file following said recording format.

16. The information processing method according to Claim 15, **characterized in** said control unit performing recording of encoded data in which GOPs (Group Of Pictures) configured of picture groups have been set, and recording control of management information corresponding to recorded data;
and performing control of recording information to be applied to reading of a referenced picture to be set as a representative image in increments of chapter set with a mark serving as playback section information in said attribute information file as representative image access information.

17. The information processing method according to Claim 15, **characterized in** said control unit performing control of recording address information and reading data size information to be applied to reading of a representative image in said attribute information file as said representative image access information.

18. The information processing method according to Claim 15, **characterized in** said control unit performing data recording control following the AVCHD format, and performing control of recording information to be applied to reading of an IDR (Instantaneous Decoding Refresh) picture which is a referenced picture to be set as a representative image in increments of chapter to be set with a playlist mark stipulated with the AVCHD format as playback section information in said attribute information file as representative image access information.

19. The information processing method according to Claim 18, **characterized in** said representative image access information being an IDR logical sector number serving as address information to be applied to reading of said IDR picture, and an IDR size which is the data size of said IDR picture.

20. The information processing method according to Claim 15, **characterized in** said control unit performing data recording control following the AVCHD format which is a data recording format having a hierarchical management configuration that has been stipulated beforehand;
and performing control of recording said representative image access information in an attribute information file storing attribute information stipulated with said AVCHD recording format.

21. The information processing method according to Claim 20, **characterized in** said control unit performing control of recording said representative image access information in a playlist file or index file stipulated with said AVCHD recording format.

22. The information processing method according to Claim 21, **characterized in** said control unit performing control of recording said representative image access information in a write-permitted region of maker-corresponding information set in a playlist file or index file which is stipulated with said AVCHD recording format.

23. An information processing method **characterized in** executing playback processing of data recorded in an information recording medium following a data recording format having a hierarchical management configuration that has been stipulated beforehand with an information processing device;
wherein with representative image reading processing of the data section set in the recorded data of an information recording medium, said control unit obtains representative image access information including the address information and reading data size information of a representative image recorded in an attribute information file stipulated with said recording format, and performs reading of the representative image following the obtained representative image access information.

24. The information processing method according to Claim 23, **characterized in** the data recorded in an information recording medium being encoded data in which GOPs (Group Of Pictures) configured of picture groups have been set;
wherein said control unit performs processing to which said representative image access information is applied at the time of reading of a referenced picture to be set as a representative image in increments of chapter set with a mark serving as playback section information.

25. The information processing method according to Claim 23, **characterized in** said control unit performing playback control of recorded data following the AVCHD format;
and performing processing to which said representative image access information is applied at the time of reading of an IDR (Instantaneous Decoding Refresh) picture which is a referenced picture to be set as a representative image in increments of chapter to be set with a playlist mark stipulated with the AVCHD format as playback section information.

26. The information processing method according to Claim 25, **characterized in** said representative image access information being an IDR logical sector number serving as address information to be applied to reading of said IDR picture, and an IDR size which is the data size of said IDR picture.

27. The information processing method according to Claim 23, **characterized in** said control unit performing playback control of recorded data following the AVCHD format which is a data recording format having a hierarchical management configuration that has been stipulated beforehand, obtaining representative access information recorded in a playlist file or index file stipulated with said AVCHD recording format, and performing reading of the representative image following the obtained representative image access information.

28. The information processing method according to Claim 27, **characterized in** said control unit obtaining representative image access information recorded in a write-permitted region of maker-corresponding information set in a playlist file or index file which is stipulated with said AVCHD recording format, and performing reading of the representative image following the obtained representative image access information.

29. A computer program **characterized in** causing an information processing device to perform data recording processing control as to an information recording medium;
and causing a control unit to perform data recording control following a data recording format having a hierarchical management configuration that has been stipulated beforehand, and to perform control of recording representative image access information to be applied to reading of a representative image of a data section set in recorded data in an attribute information file following said recording format.

30. A computer program **characterized in** causing an information processing device to execute playback processing of data recorded in an information recording medium following a data recording format having a hierarchical management configuration that has been stipulated beforehand;
and with representative image reading processing of the data section set in the recorded data of an information recording medium, causing a control unit to obtain representative image access information including the address information and reading data size information of a representative image recorded in an attribute information file stipulated with said recording format, and to perform reading of the representative image following the obtained representative image access information.
